Europäisches Patentamt

European Patent Office

Office européen des brevets

(19)

(11) **EP 1 194 465 B1**

(12) **FASCICULE DE BREVET EUROPEEN**

(45) Date de publication et mention
de la délivrance du brevet:
**13.11.2002 Bulletin 2002/46**

(21) Numéro de dépôt: **00907737.1**

(22) Date de dépôt: **28.02.2000**

(51) Int Cl.[7]: **C08G 18/00**, C08F 220/14,
C08K 5/00, E01D 19/16,
D07B 1/16

(86) Numéro de dépôt international:
**PCT/FR00/00488**

(87) Numéro de publication internationale:
**WO 00/053650 (14.09.2000 Gazette 2000/37)**

(54) **COMPOSITION DE PROTECTION DES TORONS DE CABLES POUR OUVRAGES D'ART**

ZUSAMMENSETZUNG ZUM SCHUTZ VON KABELSTRÄNGEN FÜR BRÜCKEN

COMPOSITIONS FOR PROTECTING CABLE STRANDS FOR HIGHWAY STRUCTURES

(84) Etats contractants désignés:
**AT BE CH CY DE DK ES FI FR GB GR IE IT LI LU
MC NL PT SE**

(30) Priorité: **05.03.1999 FR 9902754**

(43) Date de publication de la demande:
**10.04.2002 Bulletin 2002/15**

(73) Titulaires:
- **Vinci Construction Grands Projets
  92500 Rueil Malmaison (FR)**
- **GTM Construction
  92000 Nanterre (FR)**

(72) Inventeurs:
- **FARGIER, Cyrille
  F-92400 Courbevoie (FR)**

- **MAYER, André
  F-77300 Fontainebleau (FR)**
- **SOUSBIE, Patrick
  F-77710 Villebeon (FR)**

(74) Mandataire: **Lefebure, Gérard
  Cabinet Loyer
  78, avenue Raymond Poincaré
  75116 Paris (FR)**

(56) Documents cités:
**DE-A- 2 357 006          DE-A- 3 644 414
DE-C- 3 730 376          US-A- 3 671 622
US-A- 5 256 726**

# EP 1 194 465 B1

## Description

La présente invention concerne une composition viscoélastique de protection des torons ou fils de câbles en acier pour ouvrages d'art.

Un domaine d'application de la présente invention est la construction des ponts à haubans, des ponts suspendus ou autres structures suspendues et, d'une manière plus générale, la construction de tout ouvrage d'art dans lequel des haubans, des suspentes ou autres câbles sont prévus pour maintenir, suspendre ou consolider une partie de l'ouvrage.

Les câbles utilisés dans ces ouvrages d'art sont souvent constitués de torons (assemblages toronnés de sept fils) ou de fils disposés en faisceau et logés dans une gaine ou enveloppe tubulaire extérieure qui est commune à tous les torons ou à tous les fils du câble. La grande durée de vie exigée pour ces ouvrages, et cela dans de parfaites conditions de sécurité, impose de soigner particulièrement la protection des câbles contre la corrosion.

D'autre part, en service, les câbles sont soumis à des vibrations importantes, notamment sous l'effet du vent, de la pluie et des charges appliquées à l'ouvrage, par exemple des charges routières et/ou ferroviaires. Ces vibrations se traduisent par des rotations ou des flexions des câbles près de leurs ancrages sur l'ouvrage et, donc, par des variations de contraintes répétées (fatigue) auxquelles les câbles sont sensibles. Il convient donc d'amortir ces vibrations afin de réduire la fatigue des câbles.

Diverses solutions ont déjà été employées jusqu'à ce jour pour protéger les câbles contre la corrosion. Une première solution connue consiste à utiliser des torons galvanisés, cirés ou graissés et individuellement gainés par une gaine à paroi mince, en polyéthylène, ayant une épaisseur d'environ 1,5 mm. Les torons gainés sont assemblés en un faisceau qui est caréné par une coquille ou gaine extérieure commune à tous les torons. Aucune matière de remplissage n'est injectée dans la gaine. Cette première solution est relativement coûteuse dans la mesure où les torons gainés individuellement ont un coût à la tonne environ trois fois plus élevé que celui des torons nus et environ deux fois plus élevé que celui des torons galvanisés. En outre, cette première solution ne permet pas d'éliminer totalement les risques de corrosion. En effet, du fait de sa faible épaisseur, la gaine individuelle en polyéthylène de chaque toron est relativement fragile et il arrive qu'elle soit détériorée au cours du transport des torons ou au cours de leur manipulation en usine ou sur le chantier. Si de telles détériorations ne sont pas repérées à temps, les torons dont la gaine individuelle est ainsi endommagée peuvent se corroder plus rapidement que prévu.

Une deuxième solution consiste à utiliser des torons ou des fils, éventuellement galvanisés, qui sont mis en place dans une gaine commune dont l'espace vide résiduel intérieur est comblé par injection d'une matière de remplissage faisant office de produit anti-corrosion. Cette injection a pour but d'assurer une protection anti-corrosion à long terme des torons. Les principaux produits d'injection connus déjà utilisés à cet effet, sont le coulis de ciment, la cire pétrolière, le brai epoxy et la graisse. Ces divers produits d'injection connus présentent les avantages et inconvénients suivants :

a). Coulis de ciment

Il a l'avantage d'être économique, mais il présente des risques de fissuration, chaque fissure créant alors un chemin d'infiltration pour l'humidité qui peut donc atteindre les torons et, par voie de conséquence, entraîner leur corrosion. En outre, une fois pris, le coulis de ciment est rigide, de sorte qu'il solidarise tous les torons. Ceci provoque une augmentation de l'inertie du câble, donc une augmentation des contraintes de flexion. Le coulis de ciment, une fois pris, présente en outre l'inconvénient de ne pas permettre un remplacement individuel d'un ou plusieurs torons en cas de nécessité. Enfin, le coulis de ciment présente un poids relativement élevé, provoquant ainsi une augmentation de la "flèche" du câble, donc de la longueur de câble nécessaire pour joindre deux points d'ancrage.

b). Cire pétrolière

Elle présente les avantages d'être économique, d'être souple et de permettre un remplacement individuel des torons du câble. Par contre, elle présente de nombreux inconvénients :

1°) Elle est difficile à injecter. En effet, l'injection doit être effectuée à 80° C minimum ; l'injection doit être rapide, donc effectuée à une pression relativement élevée lorsque les câble ont une grande longueur ; et l'injection ne doit pas être interrompue, sinon la cire risque de figer. La qualité de l'injection est donc subordonnée à une mise en oeuvre irréprochable.

2°) L'enveloppe tubulaire extérieure commune à tous les torons doit avoir une plus forte épaisseur pour pouvoir résister à la température et à la pression d'injection.

3°) La cire peut figer au contact des torons et empêcher le remplissage complet des interstices entre les fils d'un même toron.

4°) La cire n'a pas de bonnes caractéristiques mécaniques. En effet, en vibrant dans leur gaine, les torons du câble repoussent la cire et créent des vides qui constituent ensuite autant de chemins d'infiltration pour l'humidité.

5°) L'étanchéité de la gaine doit être garantie durant toute la vie du câble.

c). Brai Epoxy

Il a l'avantage d'être facilement injectable, à condition que sa température soit supérieure à 20°C. Par contre, il est toxique et peu fluide, donc pénètre difficilement dans les interstices de faibles dimensions. En outre, après avoir été mis en place, il ne permet pas un remplacement individuel des torons en cas de besoin.

d). Graisse

Elle est facile à injecter. Par contre, elle présente un risque de séparation de ses composants à long terme, et elle n'a pas de bonnes caractéristiques mécaniques, comme la cire pétrolière.

D'autre part, en ce qui concerne l'amortissement des vibrations des câbles, des solutions ont déjà été proposées et sont utilisées individuellement ou en combinaison. Les phénomènes vibratoires sont généralement réduits par un dessin judicieux de la surface de la gaine, qui diminue le coefficient de traînée et/ou casse, en cas de pluie, la rigole d'eau oscillant le long de la gaine, et qui est de nature à réduire les phénomènes excitatoires. En plus, des amortisseurs, par exemple de type viscoélastique, peuvent être placés près des ancrages des câbles (ancrages inférieurs et/ou supérieurs), à une distance résultant d'un compromis entre l'efficacité des amortisseurs et leur facilité de connexion à la structure de l'ouvrage d'art.

Partant de cet état de la technique, la présente invention a pour but de fournir une composition de protection contre la corrosion des torons de câbles sous gaine pour ouvrages d'art, qui soit facilement injectable dans la gaine des câbles, avec une grande fluidité, même à basse température, pour pouvoir pénétrer dans le moindre interstice ou espace vide dans la gaine, tout en permettant un remplacement individuel d'un ou plusieurs torons ou fils du câble et tout en conférant à ce dernier des propriétés d'amortissement des vibrations auxquelles le câble peut être soumis en service.

Le problème est résolu en utilisant une composition de protection obtenue par polymérisation lente in situ, après injection à température ambiante dans une gaine entourant les torons, de réactifs monomères ou prépolymères en présence d'un solvant de gonflement.

Les réactifs de départ sont choisis pour que la polymérisation se fasse lentement, laissant le temps à la préparation liquide de départ de parfaitement pénétrer dans les interstices inter-fils même au coeur du faisceau de torons ou de fils. Cette réaction lente se traduit par une évolution lente de la viscosité dans le temps, due à la formation lente d'un polymère bi ou tridimensionnel qui forme un gel viscoélastique sous l'action du solvant de gonflement.

Divers types de monomères ou de prépolymères peuvent être utilisés pour autant que la formation de polymère soit lente et qu'ils soient susceptibles de gonfler dans un solvant en formant un gel ayant des propriétés viscoélastiques.

A titre d'exemples, on peut citer les suivants :

- les homopolymères ou copolymères vinyliques, par exemple acryliques, obtenus par polymérisation radicalaire thermique ou UV, ou en présence d'un amorceur, de monomères ou de comonomères vinyliques,

- des composés bi ou tri fonctionnels de deux types différents réagissant entre eux en donnant des polymères bi ou tri fonctionnels, par exemple :

  . les polyuréthanes obtenus par réaction de polyols et de polyisocyanates,

  . les résines époxy obtenues par réticulation d'une résine prépolymère, à base par exemple de Bisphénol A ou F, par une amine bi ou trifonctionnelle.

Des mélanges de ces polymères peuvent également être envisagés, par exemple des résines époxy/polyuréthane.

Pour améliorer l'effet anti-corrosion que la composition présente de manière inhérente du simple fait que par sa présence autour des torons, en contact intime avec eux et entre leurs fils individuels, elle s'oppose à l'entrée d'eau ou d'humidité dans la gaine, on peut ajouter un agent anti-corrosion.

Cet agent peut être choisi parmi les pigments inorganiques anti-corrosion classiques, par exemple les phosphates et notamment le phosphate de zinc.

On peut également utiliser des agents anti-corrosion organiques comme le produit vendu sous le nom de polyaniline par la Société ORMECON GmbH.

Lorsqu'on utilise des résines époxy, l'agent anti-corrosion est avantageusement constitué par un excès de l'amine utilisée pour la réticulation. Cet excès est calculé pour que le pH final de la composition soit $\geq 12$.

Le solvant de gonflement est choisi parmi les solvants peu ou pas volatils sous forme monomère ou oligomère. On peut citer les hydrocarbures aromatiques ou polycycliques comme le diisopropylnaphtalène et les terpènes, les esters de l'acide benzoïque, de l'acide phtalique ou d'acides aliphatiques saturés ou insaturés ayant dans la chaîne aliphatique au moins 10 atomes de carbone, les éthers phénoliques et notamment les résines phénoliques oligomères avec un $\overline{M}_n$, pouvant aller jusqu'à 500 et de préférence 350.

Un exemple d'un tel solvant est la résine oligomère NORSOLENE D 3005.

Les propriétés viscoélastiques et d'amortissement du gel sont fonction de la proportion de polymère dans le gel, qui contient de 10 à 90 % de polymère et 90 à 10 % de solvant de gonflement, et de préférence 15 à 55 % de polymère.

Par un choix approprié des composés entrant dans la composition de protection selon l'invention, il est aussi possible de faire en sorte qu'au moment de l'injection dans la gaine du câble, la composition de protection injectée ait une densité juste au-dessus de 1. Dans ces conditions, la composition injectée repousse l'eau de condensation qui est éventuellement présente dans la gaine.

On va maintenant donner plusieurs exemples de compositions de protection convenant pour la mise en oeuvre de l'invention.

- Exemple 1

.   Bisphénol A :        30 % en poids

.   Crésylglycidyléther :        2 % en poids

.   Prépolymère isocyanate bloqué :        20 % en poids

.   Aminés aliphatiques + prépolymère d'amine aliphatique :        11 % en poids

.   Résines de pétrole aromatiques neutres et non réactives et/ou modifiées hydroxylées (solvant de gonflement) :        37 % en poids

- Exemple 2

.   Bisphénol A :        17 % en poids

.   (2- éthylhexyl) glycidyléther :        3 % en poids

.   Prépolymère isocyanate bloqué :        5 % en poids

.   Polyaminoimidazoline :        11 % en poids

.   Résines de pétrole aromatiques neutres et non réactives et/ou modifiées hydroxylées (solvant de gonflement) :        64 % en poids

- Exemple 3

.   Bisphénol A :        9 % en poids

- Glycidyléther : 2 % en poids

- Prépolymère isocyanate bloqué : 2 % en poids

- Polyaminoimidazoline : 5 % en poids

- Résines de prétrole aromatiques neutres et non réactives et/ou modifiées hydroxylées (solvant de gonflement) : 82 % en poids

- Exemple 4

- Butanediol + polyoxyméthylèneglycol : 58,1 % en poids

- Prépolymère de MDI (diphénylméthane-4,4'-diisocyanate) : 11, 9 % en poids

- Phtalate de diisobutyle (solvant de gonflement) : 30 % en poids

- Exemple 5

- Polymère uréthane/acrylate : 35 % en poids

- MMA (méthacrylate de méthyle) : 60 % en poids

- Phtalate de diisobutyle (solvant de gonflement) : 10 % en poids

Les propriétés des compositions de protection indiquées dans les exemples donnés ci-dessus sont résumées dans le tableau suivant :

| PROPRIETES | EXEMPLE | | | | |
|---|---|---|---|---|---|
| | 1 | 2 | 3 | 4 | 5 |
| Viscosité de la Résine (poises) | 90 | 26 | 4 | 4 | 40 |
| Viscosité du Durcisseur (poises) | 50 | 28 | 20 | 0,5 | - |
| Viscosité de R + D (poises) | 80 | 28 | 12 | 1,5 | 40 |
| Mode de polymérisation | PA | PA | PA | PA | PR |
| Temps de prise (DPU) | 40 mm | 5 h | 24 h | 20 mn | 10 mn |
| Allongement à la rupture | 35 % | 60 % | 50 % | 150 % | 250 % |
| Contrainte de rupture (MPa) | 3,0 | 0,3 | 0,05 | 0,5 | 9,8 |
| Densité | 1,12 | 1,12 | 1,05 | 1,04 | 0,98 |
| Plage de température (°C) dans laquelle tg $\delta$ >0,3 à 1 Hz | + 30° à + 80° | - 25° à + 80° | -20° à + 70° | > - 60° | + 8° à + 70° |
| tg $\delta$ max à 1 Hz dans la plage de temperatures | 0,58 | 0,56 | 0,66 | 1,4 | 0,95 |

Dans ce tableau, PA signifie "polyaddition" et PR signifie "polymérisation radicalaire". En outre, tg $\delta$ est le rapport du module visqueux E" au module élastique E'. Pour l'évaluation des propriétés viscoélastiques des compositions de protection selon l'invention, on a mesuré E' et E" à l'aide d'un rhéomètre à déformation imposée du type RSA II, à différentes températures et à différentes fréquences, et tg $\delta$ a été calculé à partir des valeurs mesurées de E' et E". Le tableau ci-dessus donne les résultats obtenus pour une fréquence de 1Hz.

Comme cela est bien connu, les propriétés amortissantes d'un matériau sont d'autant plus grandes que tg $\delta$

est élevée. Des essais effectués par les demanderesses en soumettant un câble gaîné multi-torons de 40 m à des vibrations avant et après injection de la composition de protection de l'exemple 3 dans la gaine du câble ont montré que cette composition permet de doubler le coefficient d'amortissement propre du câble. On peut s'attendre à un résultat similaire avec les compositions de protection indiquées dans les autres exemples.

Grâce à ses propriétés viscoélastiques, la composition de protection selon l'invention entraîne donc une augmentation du coefficient d'amortissement d'un câble de hauban, augmentation qui permet :

- soit de supprimer les amortisseurs ponctuels généralement placés près des ancrages du hauban,

- soit de diminuer la taille desdits amortisseurs ponctuels,

- soit de diminuer la distance entre l'amortisseur ponctuel et l'ancrage (ce qui a pour effet de diminuer son efficacité, mais permet de le cacher dans une structure de l'ouvrage), ou de diminuer le coût de la fixation de l'amortisseur ponctuel à la structure de l'ouvrage.

## Revendications

1. Composition de protection des torons de câbles sous gaine pour ouvrages d'art, **caractérisée en ce qu'**elle est constituée par un gel viscoélastique obtenu par polymérisation lente in situ, après injection à température ambiante dans la gaine entourant les torons et en présence d'un solvant de gonflement, de réactifs monomères ou de prépolymères sui sont :

    a) des monomères vinyliques identiques ou différents, polymérisables par voie radicalaire, ou

    b) des composés bi ou trifonctionnels de deux types différents réagissant entre eux en donnant des polymères bi ou tridimensionnels, ou

    c) des mélanges a) et b).

2. Composition selon la revendication 1, **caractérisée en ce que** les composés bi ou trifonctionnels sont des polyols et des polyisocyanates donnant des polyuréthanes.

3. Composition selon la revendication 1, **caractérisée en ce que** les composés bi ou trifonctionnels sont des composés époxy bi ou trifonctionnels et des diamines ou des triamines donnant des résines époxy réticulées.

4. Composition selon l'une quelconque des revendications 1 à 3, **caractérisée en ce qu'**elle contient en outre un agent anti-corrosion.

5. Composition selon la revendication 4, **caractérisée en ce que** l'agent anti-corrosion est un composé inorganique de type phosphate ou un composé organique de type polyaniline.

6. Composition selon la revendication 4, **caractérisée en ce que** dans le cas des résines epoxy, l'agent anti-corrosion est constitué par un excès de la diamine ou de la triamine suffisant pour que la composition finale ait un pH $\geq$ 12.

7. Composition selon l'une quelconque des revendications 1 à 6, **caractérisée en ce que** le solvant est choisi parmi les esters de l'acide benzoïque, de l'acide phtalique ou d'acides aliphatiques saturés ou insaturés ayant dans la chaîne aliphatique au moins 10 atomes de carbone, les hydrocarbures aromatiques ou polycycliques, les terpènes et les éthers phénoliques éventuellement faiblement polymérisés.

8. Composition selon l'une quelconque des revendications 1 à 7, **caractérisée en ce qu'**elle contient de 10 à 90 % en poids de polymère et de 90 à 10 % en poids de solvant de gonflement, et de préférence de 15 à 55 % en poids de polymère.

9. Composition selon la revendication 1, **caractérisée en ce qu'**elle contient :

    .    Bisphénol A :        30 % en poids

. Crésylglycidyléther : 2 % en poids

. Prépolymère isocyanate bloqué : 20 % en poids

. Amines aliphatiques + prépolymère d'amine aliphatique : 11 % en poids

. Résines de pétrole aromatiques neutres et non réactives et/ou modifiées hydroxylées (solvant de gonflement) : 37 % en poids

**10.** Composition selon la revendication 1, **caractérisée en ce qu'**elle contient :

. Bisphénol A : 17 % en poids

. (2- éthylhexyl) glycidyléther : 3 % en poids

. Prépolymère isocyanate bloqué : 5 % en poids

. Polyaminoimidazoline : 11 % en poids

. Résines de pétrole aromatiques neutres et non réactives et/ou modifiées hydroxylées (solvant de gonflement) : 64 % en poids

**11.** Composition selon la revendication 1, **caractérisée en ce qu'**elle contient :

. Bisphénol A : 9 % en poids

. Glycidyléther : 2 % en poids

. Prépolymère isocyanate bloqué : 2 % en poids

. Polyaminoimidazoline : 5 % en poids

. Résines de prétrole aromatiques neutres et non réactives et/ou modifiées hydroxylées (solvant de gonflement) : 82 % en poids

**12.** Composition selon la revendication 1, **caractérisée en ce qu'**elle contient :

. Butanediol + polyoxyméthylèneglycol : 58,1 % en poids

. Prépolymère de MDI (diphénylméthane-4,4'-diisocyanate): 11, 9 % en poids

. Phtalate de diisobutyle (solvant de gonflement) : 30 % en poids

**13.** Composition selon la revendication 1, **caractérisée en ce qu'**elle contient :

. Polymère uréthane/acrylate : 35 % en poids

. MMA (méthacrylate de méthyle) : 60 % en poids

. Phtalate de diisobutyle (solvant de gonflement) : 10 % en poids

**14.** Utilisation d'une composition selon l'une quelconque des revendications précédentes pour augmenter le coefficient d'amortissement des câbles pour ouvrages d'art.

**Patentansprüche**

**1.** Zusammensetzung zum Schutz umhüllter Kabelstränge für Ingenieurbauten, **dadurch gekennzeichnet, daß** sie aus einem viskoelastischen Gel gebildet ist, das nach Einspritzen bei Umgebungstemperatur in die Hülle, welche die Stränge umgibt, und in Gegenwart eines Quellungslösungsmittels durch langsame in situ-Polymerisation von monomeren Reagenzien oder von Vorpolymeren erhalten wird, bei denen es sich um folgende handelt:

a) identische oder verschiedene, auf radikalischem Wege polymerisierbare Vinylmonomere oder
b) bi- oder trifunktionelle Verbindungen zweier unterschiedlicher Arten, die so miteinander reagieren, daß sie zwei- oder dreidimensionale Polymere ergeben, oder
c) Gemische von a) und b).

2. Zusammensetzung nach Anspruch 1, **dadurch gekennzeichnet, daß** die bi- oder trifunktionellen Verbindungen Polyole und Polyisocyanate sind, die Polyurethane ergeben.

3. Zusammensetzung nach Anspruch 1, **dadurch gekennzeichnet, daß** die bi- oder trifunktionellen Verbindungen bi- oder trifunktionelle Epoxyverbindungen und Diamine oder Triamine sind, die vernetzte Epoxyharze ergeben.

4. Zusammensetzung nach einem der Ansprüche 1 bis 3, **dadurch gekennzeichnet, daß** sie zudem ein Korrosionsschutzmittel enthält.

5. Zusammensetzung nach Anspruch 4, **dadurch gekennzeichnet, daß** das Korrosionsschutzmittel eine anorganische Verbindung vom Phosphattyp oder eine organische Verbindung vom Polyanilintyp ist.

6. Zusammensetzung nach Anspruch 4, **dadurch gekennzeichnet, daß** das Korrosionsschutzmittel im Falle von Epoxyharzen durch einen Diamin- oder Triamin-Überschuß gebildet ist, der ausreicht, damit die Endzusammensetzung einen pH-Wert von ≥12 aufweist.

7. Zusammensetzung nach einem der Ansprüche 1 bis 6, **dadurch gekennzeichnet, daß** das Lösungsmittel ausgewählt ist unter Benzoesäureestern, Phthalsäureestern oder Estern gesättigter oder ungesättigter aliphatischer Säuren, die in der aliphatischen Kette mindestens 10 Kohlenstoffatome aufweisen, aromatischen oder polyzyklischen Kohlenwasserstoffen, Terpenen und gegebenenfalls schwach polymerisierten Phenolethern.

8. Zusammensetzung nach einem der Ansprüche 1 bis 7, **dadurch gekennzeichnet, daß** sie 10 bis 90 Gew.-% Polymer und 90 bis 10 Gew.-% Quellungslösungsmittel und vorzugsweise 15 bis 55 Gew.-% Polymer enthält.

9. Zusammensetzung nach Anspruch 1, **dadurch gekennzeichnet, daß** sie folgendes enthält:

- Bisphenol A: 30 Gew.-%
- Cresylglycidylether: 2 Gew.-%
- geschütztes Isocyanat-Vorpolymer: 20 Gew.-%
- aliphatische Amine + aliphatisches Amin-Vorpolymer: 11 Gew.-%
- Neutrale und nicht-reaktive und/oder modifizierte, hydroxylierte aromatische Petroleumharze (Quellungslösungsmittel): 37 Gew.-%.

10. Zusammensetzung nach Anspruch 1, **dadurch gekennzeichnet, daß** sie folgendes enthält:

- Bisphenol A: 17 Gew.-%
- (2-Ethylhexyl)glycidylether: 3 Gew.-%
- geschütztes Isocyanat-Vorpolymer: 5 Gew.-%
- Polyaminoimidazolin: 11 Gew.-%
- Neutrale und nicht-reaktive und/oder modifizierte, hydroxylierte aromatische Petroleumharze (Quellungslösungsmittel): 64 Gew.-%.

11. Zusammensetzung nach Anspruch 1, **dadurch gekennzeichnet, daß** sie folgendes enthält:

- Bisphenol A: 9 Gew.-%
- Glycidylether: 2 Gew.-%
- geschütztes Isocyanat-Vorpolymer: 2 Gew.-%
- Polyaminoimidazolin: 5 Gew.-%
- Neutrale und nicht-reaktive und/oder modifizierte, hydroxylierte aromatische Petroleumharze (Quellungslösungsmittel):    82 Gew.-%.

**12.** Zusammensetzung nach Anspruch 1, **dadurch gekennzeichnet, daß** sie folgendes enthält:

- .    Butandiol + Polyoxymethylenglykol:    58,1 Gew.-%
- .    MDI-Vorpolymer (Diphenylmethan-4,4'-diisocyanat):    11,9 Gew.-%
- .    Diisobutylphthalat (Quellungslösungsmittel):    30 Gew.-%.

**13.** Zusammensetzung nach Anspruch 1, **dadurch gekennzeichnet, daß** sie folgendes enthält:

- .    Urethan-/Acrylat-Polymer:    35 Gew.-%
- .    MMA (Methylmethacrylat):    60 Gew.-%
- .    Diisobutylphthalat (Quellungslösungsmittel):    10 Gew.-%.

**14.** Verwendung einer Zusammensetzung nach einem der vorhergehenden Ansprüche zum Erhöhen der Abklingkonstante der Kabel für Ingenieurbauten.

**Claims**

**1.** A composition for protecting sheathed cable strands for civil-engineering structures, **characterised in that** it comprises a viscoelastic gel obtained by the slow in situ polymerisation, after injection at ambient temperature into the sheath surrounding the strands and in the presence of a swelling solvent, of monomeric reagents or of prepolymers being:

a) identical or different vinyl monomers, polymerisable by free-radical polymerisation, or
b) bi- or trifunctional compounds of two different types reacting with each other to give bi- or tridimensional polymers, or
c) mixtures of a) and b).

**2.** A composition according to claim 1, **characterised in that** the bi- or trifunctional compounds are polyols and polyisocyanates yielding polyurethanes.

**3.** A composition according to claim 1. **characterised in that** the bi- or trifunctional compounds are bi- or trifunctional epoxy compounds and diamines or triamines yielding crosslinked epoxy resins.

**4.** A composition according to any one of claims 1 to 3, **characterised in that** it also contains an anti-corrosion agent.

**5.** A composition according to claim 4, **characterised in that** the anti-corrosion agent is a phosphate-type inorganic compound or a polyaniline-type organic compound.

**6.** A composition according to claim 4, **characterised in that**, in the case of epoxy resins, the anti-corrosion agent is formed by an excess of the diamine or triamine sufficient for the final composition to have a $pH \geq 12$.

**7.** A composition according to any one of claims 1 to. 6, **characterised in that** the solvent is selected from esters of benzoic acid, phthalic acid or saturated or unsaturated allphatic acids having at least 10 carbon atoms in the aliphatic chain, aromatic or polycyclic hydrocarbons, terpenes and phenol ethers, optionally slightly polymerised.

**8.** A composition according to any one of claims 1 to 7, **characterised in that** it contains from 10% to 90% by weight of polymer and from 90% to 10% by weight of swelling solvent, preferably from 15% to 55% by weight of polymer.

**9.** A composition according to claim 1, **characterised in that** it contains:

- •    Bisphenol A:    30% by weight
- •    Cresyl glycidyl ether:    2% by weight
- •    Blocked isocyanate prepolymer:    20% by weight
- •    Aliphatic amines + aliphatic amine prepolymer:    11% by weight
- •    Aromatic neutral and non-reactive and/or modified hydroxylated petroleum resins (swelling solvent):    37% by weight

10. A composition according to claim 1, **characterised in that** it contains:

- Bisphenol A: 17% by weight
- (2-ethylhexyl) glycidyl ether: 3% by weight
- Blocked isocyanate prepolymer: 5% by weight
- Polyaminoimidazoline: 11% by weight
- Aromatic neutral and non-reactive and/or modified hydroxylated petroleum resins (swelling solvent): 64% by weight

11. A composition according to claim 1, **characterised in that** it contains:

- Bisphenol A: 9% by weight
- Glycidyl ether: 2% by weight
- Blocked isocyanate prepolymer: 2% by weight
- Polyaminoimidazoline: 5% by weight
- Aromatic neutral and non-reactive and/or modified hydroxylated petroleum resins (swelling solvent): 82% by weight

12. A composition according to claim 1, **characterised in that** it contains:

- Butanediol + polyoxymethylene glycol: 58.1% by weight
- MDI prepolymer (diphenylmethane-4,4'-diisocyanate): 11.9% by weight
- Diisobutyl phthalate (swelling solvent): 30% by weight

13. A composition according to claim 1, **characterised in that** it contains:

- Urethane/acrylate polymer: 35% by weight
- MMA (methyl methacrylate): 60% by weight
- Diisobutyl phthalate (swelling solvent): 10% by weight

14. Use of a composition according to any one of the preceding claims to increase the damping coefficent of cables for civil-engineering structures.